(19)

**Europäisches Patentamt**
**European Patent Office**
**Office européen des brevets**

(11) **EP 4 572 137 A1**

(12) **EUROPEAN PATENT APPLICATION**

(43) Date of publication:
**18.06.2025 Bulletin 2025/25**

(21) Application number: **23307170.3**

(22) Date of filing: **11.12.2023**

(51) International Patent Classification (IPC):
*H02S 50/00* *(2014.01)*

(52) Cooperative Patent Classification (CPC):
**H02S 50/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Commissariat à l'Energie Atomique et aux Energies Alternatives**
**75015 Paris (FR)**

• **Université Savoie Mont Blanc**
**73000 Chambéry (FR)**
• **Centre National de la Recherche Scientifique**
**75016 Paris (FR)**

(72) Inventors:
• **CARDENAS, Carlos**
**73000 CHAMBERY (FR)**
• **LESPINATS, Sylvain**
**38054 GRENOBLE CEDEX 9 (FR)**

(74) Representative: **Lavoix**
**2, place d'Estienne d'Orves**
**75441 Paris Cedex 09 (FR)**

(54) **A METHOD FOR DETERMINING A SINGLE-DIODE MODEL FOR A PHOTOVOLTAIC ARRAY**

(57)    The present invention concerns a method for determining a single-diode model for a photovoltaic array, the single-diode model enabling to model the current-voltage characteristic of the photovoltaic array as a function of several parameters, the method comprising:
- a phase for determining measured values for the photovoltaic array,
- a phase for optimizing only one parameter, called target parameter, of the single-diode model,
- a phase for calculating the values of other parameters of the single-diode model on the basis of the optimized value of the target parameter and of cardinal values, so as to obtain an optimized single-diode model for the photovoltaic array.

FIG.1

Processed by Luminess, 75001 PARIS (FR)

EP 4 572 137 A1

**Description**

TECHNICAL FIELD OF THE INVENTION

The present invention concerns a method for determining a single-diode model for a photovoltaic array. The present invention also concerns an associated computer program product. The present invention also relates to an associated readable information carrier.

BACKGROUND OF THE INVENTION

Nowadays, identifying the state of health of a solar photovoltaic system is crucial.
For doing this, the single-diode model (SDM) is usually used. Most of these models require knowing the number of series/parallel solar cells and the irradiance/temperature of the PV system. This supposes a limitation on these approaches. Also, due to the mathematical characteristics of the models, the calculation speed of their parameters is usually slow.
For this purpose, the SDM counting with five parameters is widely used as an analysis tool. However, due to the nonlinear nature of the SDM, some difficulties arise when determining its parameters and the current method are based on complex multi-parameters optimization, which renders the calculation time-consuming.

SUMMARY OF THE INVENTION

Hence, there exists a need for a method enabling to quickly determine a single-diode model for a photovoltaic array.
To this end, the invention relates to a method for determining a single-diode model for a photovoltaic array, the single-diode model enabling to model the current-voltage characteristic of the photovoltaic array as a function of several parameters, the method being computer implemented and comprising:

- a phase for determining measured values for the photovoltaic array, the determination phase comprising:

  • obtaining a measured current-voltage characteristic for the photovoltaic array,
  • determining cardinal values from the measured current-voltage characteristic, the cardinal values being:

    ○ the short-circuit current which is the current at zero voltage,
    ○ the open-circuit voltage which is the voltage at zero current,
    ○ the maximum power current which is the current giving the maximal power, and
    ○ the maximum power voltage which is the voltage giving the maximal power,

  • determining measured values representative of the current-voltage characteristic of the photovoltaic array as a function of the measured current-voltage characteristic,

- a phase for optimizing only one parameter, called target parameter, of the single-diode model, the optimization phase comprising the steps of:

  • setting an initial value for the target parameter among an interval of values,
  • calculating the values of the other parameters of the single-diode model as a function of the set initial value of the target parameter and of the cardinal values,
  • determining model values representative of a modeled current-voltage characteristic of the photovoltaic array as a function of the set initial value of the target parameter and of the other calculated parameters for the single-diode model,
  • determining an error between the model values and the cardinal values, and
  • optimizing the value of the target parameter so as to minimize the error and to obtain an optimized value for the target parameter,

- a phase for calculating the values of other parameters of the single-diode model on the basis of the optimized value of the target parameter and of the cardinal values, so as to obtain an optimized single-diode model for the photovoltaic array.

The method according to the invention may comprise one or more of the following features considered alone or in any combination that is technically possible:

- the single-diode model depends on five parameters which are: a photogenerated current, a diode ideality factor, a reverse saturation current, a series resistance and a shunt conductance, the target parameter being the diode ideality factor;
- the single-diode model is given by the following equation:

$$i_{\mathrm{ph}} = i_{\mathrm{o}} \cdot \left( \exp\left[ \frac{V_{\mathrm{pv}} + r_{\mathrm{s}} \cdot I_{\mathrm{pv}}}{a} \right] - 1 \right) + g_{\mathrm{sh}} \cdot \left( V_{\mathrm{pv}} + r_{\mathrm{s}} \cdot I_{\mathrm{pv}} \right) + I_{\mathrm{pv}}$$

Where:

- $i_{\mathrm{ph}}$ is the photogenerated current,
- $i_{\mathrm{o}}$ is the reverse saturation current,
- $a$ is the diode ideality factor,
- $r_{\mathrm{s}}$ is the series resistance,
- $g_{\mathrm{sh}}$ is the shunt conductance,
- $I_{\mathrm{pv}}$ is a current of the measured current-voltage characteristic, and
- $V_{\mathrm{pv}}$ is a voltage of the measured current-voltage characteristic;
- the determination of the measured values comprised:

  - the normalization of the measured current-voltage characteristic by the short-circuit current for the current and by the open-circuit voltage for the voltage, and
  - the transformation of the normalized measured current-voltage characteristic into polar coordinates with a radius and an angle for each point of the measured current-voltage characteristic;

- the polar coordinates for the measured current-voltage characteristic are given by the following formula:

$$\rho = \sqrt{\left( \frac{V_{PV}}{V_{OC}} \right)^2 + \left( \frac{I_{PV}}{I_{SC}} \right)^2}$$

$$\varphi = \arctan\left( \frac{V_{PV} \cdot I_{SC}}{I_{PV} \cdot V_{OC}} \right)$$

Where:

- $\rho$ is the radius in polar coordinates,
- $\varphi$ is the angle in polar coordinates,
- $V_{PV}$ is a voltage of the measured current-voltage characteristic,
- $I_{PV}$ is a current of the measured current-voltage characteristic,
- $V_{OC}$ is the open-circuit voltage, and
- $I_{SC}$ is the short-circuit current.

  - the model values are determined in polar coordinates, each radius of the model values being obtained for an angle corresponding to an angle of the measured values;

  - optimization of the value of the target parameter is carried out using a dichotomy algorithm.
  - during the optimizing phase and the calculating phase, the values of the other parameters of the single-diode model are calculated as a function of the corresponding value of the target parameter, of the maximum power current normalized by the short-circuit current, and of the open-circuit voltage normalized by the maximum power voltage;
  - the other parameters are given by the following equation:

$$\left[\frac{v_{mp} \cdot \exp\left(\frac{1}{a}\right) - \exp\left(\frac{v_{mp} + r_s \cdot i_{mp}}{a}\right) + i_{mp} \cdot \exp\left(\frac{r_s}{a}\right) - \left(v_{mp} + i_{mp} - 1\right)}{\left(v_{mp} - r_s \cdot \left(1 - i_{mp}\right)\right) \cdot \exp\left(\frac{1}{a}\right) - (1 - r_s) \cdot \exp\left(\frac{v_{mp} + r_s \cdot i_{mp}}{a}\right) + \left(1 - \left(v_{mp} + r_s \cdot i_{mp}\right)\right) \cdot \exp\left(\frac{r_s}{a}\right)}\right]$$
$$\cdot \exp\left(\frac{v_{mp} + r_s \cdot i_{mp}}{a}\right) \cdot \left(1 - r_s \cdot i_{mp}\right)$$
$$+[a]$$
$$\cdot \left[\frac{\left(1 - i_{mp}\right) \cdot \exp\left(\frac{1}{a}\right) - \exp\left(\frac{v_{mp} + r_s \cdot i_{mp}}{a}\right) + i_{mp} \cdot \exp\left(\frac{r_s}{a}\right)}{\left(v_{mp} - r_s \cdot \left(1 - i_{mp}\right)\right) \cdot \exp\left(\frac{1}{a}\right) - (1 - r_s) \cdot \exp\left(\frac{v_{mp} + r_s \cdot i_{mp}}{a}\right) + \left(1 - \left(v_{mp} + r_s \cdot i_{mp}\right)\right) \cdot \exp\left(\frac{r_s}{a}\right)}\right]$$
$$\cdot \left(1 - r_s \cdot i_{mp}\right)$$
$$-[a] \cdot i_{mp}$$
$$= 0$$

$$i_{ph}$$
$$= \frac{v_{mp} \cdot \exp\left(\frac{1}{a}\right) - \exp\left(\frac{v_{mp} + r_s \cdot i_{mp}}{a}\right) + i_{mp} \cdot \exp\left(\frac{r_s}{a}\right) - \left(v_{mp} + i_{mp} - 1\right)}{\left(v_{mp} - r_s \cdot \left(1 - i_{mp}\right)\right) \cdot \exp\left(\frac{1}{a}\right) - (1 - r_s) \cdot \exp\left(\frac{v_{mp} + r_s \cdot i_{mp}}{a}\right) + \left(1 - \left(v_{mp} + r_s \cdot i_{mp}\right)\right) \cdot \exp\left(\frac{r_s}{a}\right)}$$

$$i_o$$
$$= \frac{v_{mp} + i_{mp} - 1}{\left(v_{mp} - r_s \cdot \left(1 - i_{mp}\right)\right) \cdot \exp\left(\frac{1}{a}\right) - (1 - r_s) \cdot \exp\left(\frac{v_{mp} + r_s \cdot i_{mp}}{a}\right) + \left(1 - \left(v_{mp} + r_s \cdot i_{mp}\right)\right) \cdot \exp\left(\frac{r_s}{a}\right)}$$

$$g_{sh}$$
$$= \frac{\left(1 - i_{mp}\right) \cdot \exp\left(\frac{1}{a}\right) - \exp\left(\frac{v_{mp} + r_s \cdot i_{mp}}{a}\right) + i_{mp} \cdot \exp\left(\frac{r_s}{a}\right)}{\left(v_{mp} - r_s \cdot \left(1 - i_{mp}\right)\right) \cdot \exp\left(\frac{1}{a}\right) - (1 - r_s) \cdot \exp\left(\frac{v_{mp} + r_s \cdot i_{mp}}{a}\right) + \left(1 - \left(v_{mp} + r_s \cdot i_{mp}\right)\right) \cdot \exp\left(\frac{r_s}{a}\right)}$$

Where:

- $i_{ph}$ is the photogenerated current,
- $i_o$ is the reverse saturation current,
- $a$ is the diode ideality factor,
- $r_s$ is the series resistance,
- $g_{sh}$ is the shunt conductance,
- $i_{mp}$ is the maximum power current normalized by the short-circuit current, and
- $v_{mp}$ is the maximum power voltage normalized by the maximum power voltage.

- the calculated error is the root mean square error;
- the interval of values for the target parameters is bounded, the boundaries being chosen so that the obtained model values are representative of a modeled current-voltage characteristic passing by the maximum power current and the maximum power voltage;

The invention also relates to a computer program product comprising a computer readable medium, having thereon a computer program comprising program instructions, the computer program being loadable into a data-processing unit and causing execution of a method as previously described when the computer program is run by the data-processing unit.

The invention also relates to a readable information carrier on which is stored a computer program product as previously described.

BRIEF DESCRIPTION OF THE DRAWINGS

The invention will be easier to understand in view of the following description, provided solely as an example and with reference to the appended drawings in which:

- Figure 1 is a schematic view of an example of a calculator for implementing a method for determining a single-diode model for a photovoltaic array,
- Figure 2 is a schematic representation illustrating the implementation of phases of a method for determining a single-diode model for a photovoltaic array,
- Figure 3 is a measured current-voltage characteristic of a photovoltaic array, and
- Figure 4 is a schematic representation of a single-diode model described by five parameters.

DETAILED DESCRIPTION OF SOME EMBODIMENTS

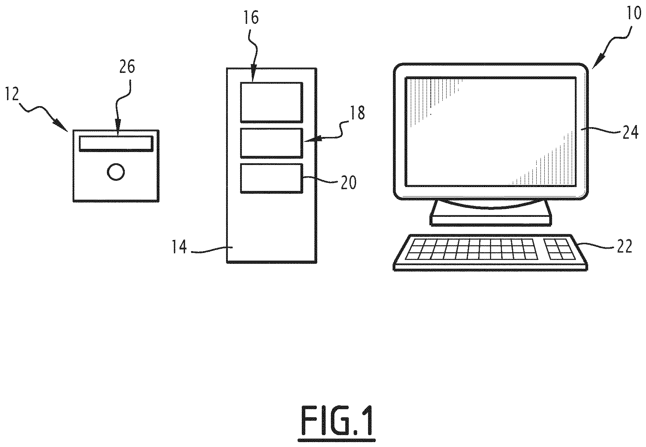

A calculator 20 and a computer program product 22 are illustrated in figure 1.

The calculator 20 is preferably a computer.

More generally, the calculator 20 is a computer or computing system, or similar electronic computing device adapted to manipulate and/or transform data represented as physical, such as electronic, quantities within the computing system's registers and/or memories into other data similarly represented as physical quantities within the computing system's memories, registers or other such information storage, transmission or display devices.

The calculator 20 interacts with the computer program product 22.

As illustrated on figure 1, the calculator 20 comprises a processor 24 comprising a data processing unit 26, memories 28 and a reader 30 for information media. In the example illustrated on figure 1, the calculator 20 comprises a human machine interface 32, such as a keyboard, and a display 34.

The computer program product 22 comprises an information medium 36.

The information medium 36 is a medium readable by the calculator 20, usually by the data processing unit 26. The readable information medium 36 is a medium suitable for storing electronic instructions and capable of being coupled to a computer system bus.

By way of example, the information medium 36 is a USB key, a floppy disk or flexible disk (of the English name "Floppy disc"), an optical disk, a CD-ROM, a magneto-optical disk, a ROM memory, a memory RAM, EPROM memory, EEPROM memory, magnetic card or optical card.

On the information medium 36 is stored the computer program 22 comprising program instructions.

The computer program 22 is loadable on the data processing unit 26 and is adapted to entail the implementation of a method for determining a single-diode model for a photovoltaic array, when the computer program 22 is loaded on the processing unit 26 of the calculator 20.

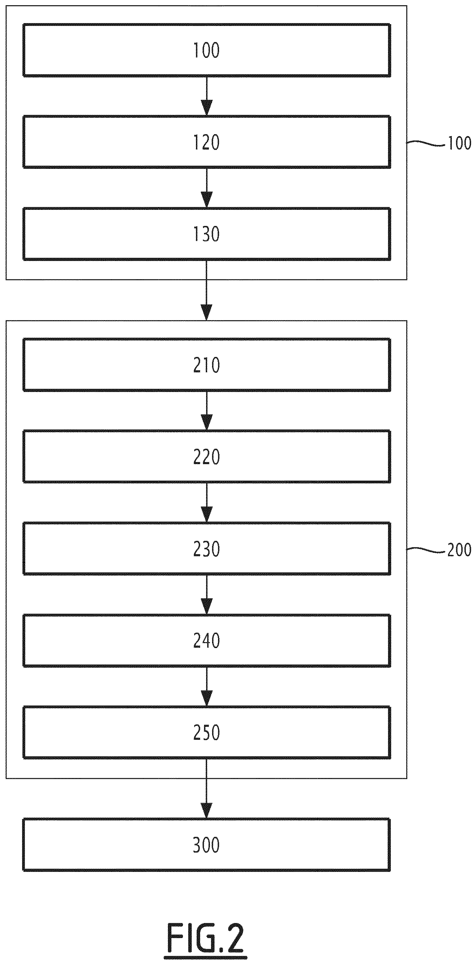

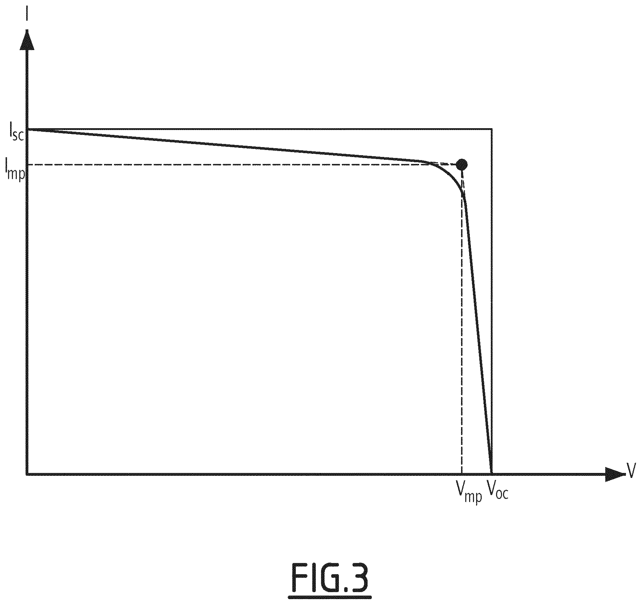

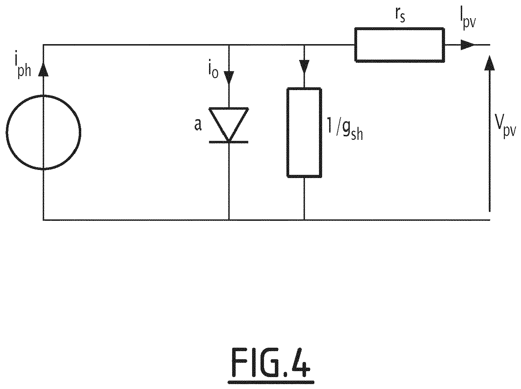

A method for determining a single-diode model for a photovoltaic array will now be described with reference to the organigram of figure 2, and to figures 3 and 4.

The photovoltaic array is composed of several photovoltaic modules. Each photovoltaic module is composed of several photovoltaic cells.

The single-diode model enables to model the current-voltage characteristic of the photovoltaic array as a function of several parameters.

Preferably, the single diode model depends on only five parameters which are: a photogenerated current $i_{ph}$, a diode ideality factor $a$, a reverse saturation current $i_0$, a series resistance $r_s$ and a shunt conductance $g_{sh}$. In a variant, the series conductance which is the inverse of the series resistance $r_s$ is considered instead of the series resistance $r_s$ and/or the shunt resistance which is the inverse of the shunt conductance $g_{sh}$ is considered instead of the shunt conductance $g_{sh}$.

In an example, the single-diode model is given by the following equation corresponding to the electrical circuit of figure 4:

$$i_{ph} = i_0 \cdot \left( \exp \left[ \frac{V_{pv} + r_s \cdot I_{pv}}{a} \right] - 1 \right) + g_{sh} \cdot \left( V_{pv} + r_s \cdot I_{pv} \right) + I_{pv} \qquad (1)$$

Where:

- $i_{ph}$ is the photogenerated current,
- $i_0$ is the reverse saturation current,
- $a$ is the diode ideality factor,
- $r_s$ is the series resistance,
- $g_{sh}$ is the shunt conductance,

- $I_{pv}$ is a current of the measured current-voltage characteristic, and
- $V_{pv}$ is a voltage of the measured current-voltage characteristic.

In a variant, the single-diode model is given by adding an additional term to the righthand side of equation (1). The additional term describes the avalanche phenomenon.

For example, the single diode model taking into account the avalanche phenomenon is given by the following formula:

$$i_{ph} = i_o \cdot \left( \exp\left[ \frac{V_{pv} + r_s \cdot I_{pv}}{a} \right] - 1 \right) + g_{sh} \cdot \left( V_{pv} + r_s \cdot I_{pv} \right) + I_{pv}$$

$$+ g_{sh} \cdot \left( V_{pv} + r_s \cdot I_{pv} \right) \cdot \left( b \cdot \left( 1 - c \cdot \left( V_{pv} + r_s \cdot I_{pv} \right) \right)^{-m} \right)$$

with b, c and m additional parameters to be fixed.

Other embodiments are nonetheless possible.

The method comprises a phase 100 of determining measured values for the photovoltaic array.

The determination phase comprises a step 110 of obtaining a measured current-voltage characteristic for the photovoltaic array. The measured current-voltage characteristic has, for example, been obtained using sensor(s), such as an IV tracer. An example of a measured current-voltage characteristic is given on figure 3.

The determination phase comprises a step 120 of determining cardinal values from the measured current-voltage characteristic.

The cardinal values are:

- the short-circuit current $I_{sc}$ which is the current at zero voltage,
- the open-circuit voltage $V_{oc}$ which is the voltage at zero current,
- the maximum power current $I_{mp}$ which is the current giving the maximal power, and
- the maximum power voltage $V_{mp}$ which is the voltage giving the maximal power.

The cardinal values are illustrated on the current-voltage characteristic given as an example in figure 3.

The determination phase comprises a step 130 of determining measured values representative of the current-voltage characteristic of the photovoltaic array as a function of the measured current-voltage characteristic. The determination of the measured values are obtained through pretreatment of

In an example of embodiment, the determination of the measured values comprised:

- the normalization of the measured current-voltage characteristic by the short-circuit current $I_{sc}$ for the current and by the open-circuit voltage $V_{oc}$ for the voltage, and
- the transformation of the normalized measured current-voltage characteristic into polar coordinates with a radius and an angle for each point of the measured current-voltage characteristic. Hence, each couple of values of the normalized measured current-voltage characteristic is transformed into a couple radius-angle in the polar coordinates system.

More precisely, the polar coordinates for the measured current-voltage characteristic are given by the following formula:

$$\rho = \sqrt{\left(\frac{V_{PV}}{V_{OC}}\right)^2 + \left(\frac{I_{PV}}{I_{SC}}\right)^2} \qquad (2)$$

$$\varphi = \arctan\left(\frac{V_{PV} \cdot I_{SC}}{I_{PV} \cdot V_{OC}}\right) \qquad (3)$$

Where:

- $\rho$ is the radius in polar coordinates,
- $\varphi$ is the angle in polar coordinates,
- $V_{PV}$ is a voltage of the measured current-voltage characteristic,
- $I_{PV}$ is a current of the measured current-voltage characteristic,
- $V_{OC}$ is the open-circuit voltage, and

-  $I_{SC}$ is the short-circuit current.

In an example, the transformation in polar coordinates is as described in the document FR 3 130 453 A.

In a variant, no polar coordinates are calculated and the measured values are the values of the measured current-voltage characteristic, eventually normalized by the short-circuit current $I_{sc}$ for the current and by the open-circuit voltage $V_{oc}$ for the voltage.

The method comprises a phase 200 for optimizing only one parameter, called target parameter, of the single-diode model.

In the example of the single diode model described above, the target parameter is preferably the diode ideality factor a.

In a variant, the target parameter is anyone of the following parameter: the photogenerated current $i_{ph}$, the reverse saturation current $i_0$, the series resistance $r_s$ and the shunt conductance $g_{sh}$.

The optimizing phase 200 comprises a step 210 of setting of an initial value for the target parameter among an interval of values.

Preferably, the interval of values for the target parameter is bounded. In an example, the boundaries are chosen so that the obtained model values are representative of a modeled current-voltage characteristic passing by the maximum power current $I_{mp}$ and the maximum power voltage $V_{mp}$.

For example, the minimum limit of the target parameter is defined by the computational program used, and the maximum limit of the target parameter is calculated as indicated in the article of A. Laudani, F. Riganti Fulginei, A. Salvini, G. M. Lozito, and S. Coco, "Very Fast and Accurate Procedure for the Characterization of Photovoltaic Panels from Datasheet Information," International Journal of Photoenergy, vol. 2014, Mar. 2014, doi: 10.1155/2014/946360.

As an example, for the diode ideality factor, the calculation of a maximum limit $a_{max}$ can be found by solving the following equation (equation corresponding to $g_{sh}=0$) :

$$0 = \left(1 - i_{mp}\right) \cdot \exp\left(\frac{1}{a_{max}}\right) - \exp\left(\frac{v_{mp}}{a_{max}}\right) + i_{mp}$$

Where:

- 

$$v_{mp} = \frac{V_{mp}}{V_{OC}},$$

and

- 

$$v_{mp} = \frac{V_{mp}}{V_{OC}},$$

$$i_{mp} = \frac{I_{mp}}{I_{SC}}$$

The optimizing phase 200 comprises a step 220 of calculating the values of the other parameters of the single-diode model as a function of the set initial value of the target parameter and of the cardinal values. In particular, the cardinal values are used in the form of a ratio, called current ratio $i_{mp}$, between the short-circuit current $I_{sc}$ and the maximum power current $I_{mp}$, and a ratio, called voltage ratio $v_{mp}$, between the open-circuit voltage $V_{oc}$ and the maximum power voltage $V_{mp}$.

Hence, the values of the other parameters of the single-diode model are calculated as a function of the corresponding value of the target parameter, of the current ratio $i_{mp}$, and of the voltage ratio $v_{mp}$.

In an example, the other parameters are given by the following equations.

The equation (eq. 4) is a function depending only on the diode ideality factor a, the short-circuit current $I_{sc}$, the open-circuit voltage $V_{oc}$, the maximum power current $I_{mp}$, the maximum power voltage $V_{mp}$ and the series resistance $r_s$.

When a is set, there is only at most one possible value for $r_s$ >0, to make the following equation true (given that in addition to a, $I_{sc}$, $V_{oc}$, $I_{mp}$ and $V_{mp}$ have a known value) :

$$\left[\frac{v_{mp} \cdot \exp\left(\frac{1}{a}\right) - \exp\left(\frac{v_{mp} + r_s \cdot i_{mp}}{a}\right) + i_{mp} \cdot \exp\left(\frac{r_s}{a}\right) - \left(v_{mp} + i_{mp} - 1\right)}{\left(v_{mp} - r_s \cdot \left(1 - i_{mp}\right)\right) \cdot \exp\left(\frac{1}{a}\right) - \left(1 - r_s\right) \cdot \exp\left(\frac{v_{mp} + r_s \cdot i_{mp}}{a}\right) + \left(1 - \left(v_{mp} + r_s \cdot i_{mp}\right)\right) \cdot \exp\left(\frac{r_s}{a}\right)}\right]$$
$$\cdot \exp\left(\frac{v_{mp} + r_s \cdot i_{mp}}{a}\right) \cdot \left(1 - r_s \cdot i_{mp}\right)$$
$$+[a]$$
$$\cdot \left[\frac{\left(1 - i_{mp}\right) \cdot \exp\left(\frac{1}{a}\right) - \exp\left(\frac{v_{mp} + r_s \cdot i_{mp}}{a}\right) + i_{mp} \cdot \exp\left(\frac{r_s}{a}\right)}{\left(v_{mp} - r_s \cdot \left(1 - i_{mp}\right)\right) \cdot \exp\left(\frac{1}{a}\right) - \left(1 - r_s\right) \cdot \exp\left(\frac{v_{mp} + r_s \cdot i_{mp}}{a}\right) + \left(1 - \left(v_{mp} + r_s \cdot i_{mp}\right)\right) \cdot \exp\left(\frac{r_s}{a}\right)}\right]$$
$$\cdot \left(1 - r_s \cdot i_{mp}\right)$$
$$-[a] \cdot i_{mp}$$
$$= 0 \quad (4)$$

Other ways for determining $r_s$ are nonetheless possible, for example by testing different values of $r_s$ and choosing the right value of $r_s$ as a function of the value of the diode ideality factor a, for example using a correspondence table.
The other parameters of the model may be deduced directly from known values and calculated $r_s$ according to equations 5 to 7.

$$i_{ph}$$
$$= \frac{v_{mp} \cdot \exp\left(\frac{1}{a}\right) - \exp\left(\frac{v_{mp} + r_s \cdot i_{mp}}{a}\right) + i_{mp} \cdot \exp\left(\frac{r_s}{a}\right) - \left(v_{mp} + i_{mp} - 1\right)}{\left(v_{mp} - r_s \cdot \left(1 - i_{mp}\right)\right) \cdot \exp\left(\frac{1}{a}\right) - \left(1 - r_s\right) \cdot \exp\left(\frac{v_{mp} + r_s \cdot i_{mp}}{a}\right) + \left(1 - \left(v_{mp} + r_s \cdot i_{mp}\right)\right) \cdot \exp\left(\frac{r_s}{a}\right)}$$
$$(5)$$

$$i_o$$
$$= \frac{v_{mp} + i_{mp} - 1}{\left(v_{mp} - r_s \cdot \left(1 - i_{mp}\right)\right) \cdot \exp\left(\frac{1}{a}\right) - \left(1 - r_s\right) \cdot \exp\left(\frac{v_{mp} + r_s \cdot i_{mp}}{a}\right) + \left(1 - \left(v_{mp} + r_s \cdot i_{mp}\right)\right) \cdot \exp\left(\frac{r_s}{a}\right)}$$
$$(6)$$

$$g_{sh}$$
$$= \frac{\left(1 - i_{mp}\right) \cdot \exp\left(\frac{1}{a}\right) - \exp\left(\frac{v_{mp} + r_s \cdot i_{mp}}{a}\right) + i_{mp} \cdot \exp\left(\frac{r_s}{a}\right)}{\left(v_{mp} - r_s \cdot \left(1 - i_{mp}\right)\right) \cdot \exp\left(\frac{1}{a}\right) - \left(1 - r_s\right) \cdot \exp\left(\frac{v_{mp} + r_s \cdot i_{mp}}{a}\right) + \left(1 - \left(v_{mp} + r_s \cdot i_{mp}\right)\right) \cdot \exp\left(\frac{r_s}{a}\right)}$$
$$(7)$$

We can notice that eq. 4 can be written as:

$$\left[i_{ph}\right] \cdot \exp\left(\frac{v_{mp} + r_s \cdot i_{mp}}{a}\right) \cdot \left(1 - r_s \cdot i_{mp}\right) + [a] \cdot \left[g_{sh}\right] \cdot \left(1 - r_s \cdot i_{mp}\right) - [a] \cdot i_{mp} = 0$$

The optimizing phase 200 comprises a step 230 of determining model values representative of a modeled current-voltage characteristic of the photovoltaic array as a function of the set initial value of the target parameter and of the other calculated parameters for the single-diode model. The model values are homogeneous with the measured values so as to be compared.
The determination of the model values comprises:

- determining the single diode model array $\rho_{\text{model}}(\varphi)$ as a function of the set initial value of the target parameter and of the other calculated parameters for the single-diode model, and
- then determining the model values $\rho_{\text{model}}(\varphi_i)$ (i=1 to n) which corresponds to values of the model for the same antecedent than the measured values.

In an example of implementation (when the measured values are expressed in polar coordinates as described above), the model values are determined in polar coordinates. Each radius of the model values is obtained for an angle corresponding to an angle of the measured values.

In an example, the model values are calculated using the following formula:

$$\rho_{model}(\varphi) = \frac{i_{\text{ph}} + i_{\text{o}}}{g_{\text{sh}} \cdot \cos(\varphi) + (g_{\text{sh}} \cdot r_{\text{s}} + 1) \cdot \sin(\varphi)} - \frac{a}{\cos(\varphi) + r_{\text{s}} \cdot \sin(\varphi)} \cdot W_0$$
$$\left( \frac{i_{\text{o}} \cdot (\cos(\varphi) + r_{\text{s}} \cdot \sin(\varphi)) \cdot \exp\left( \frac{(i_{\text{ph}} + i_{\text{o}}) \cdot (\cos(\varphi) + r_{\text{s}} \cdot \sin(\varphi))}{a \cdot (g_{\text{sh}} \cdot \cos(\varphi) + (g_{\text{sh}} \cdot r_{\text{s}} + 1) \cdot \sin(\varphi))} \right)}{a \cdot (g_{\text{sh}} \cdot \cos(\varphi) + (g_{\text{sh}} \cdot r_{\text{s}} + 1) \cdot \sin(\varphi))} \right)$$

$$(8)$$

Where :

- The notations are the same than for equations (1), (2) and (3), and
- $W_0$ is the real branch of the Lambert function.

Other equations could also be used to determine the model values in polar coordinates, for example based on a simplification of equation (4).

But other options are also possible. The simplest is the trial-and-error method. We try a value, and if it's too low, we try a larger value (and vice versa). Then, gradually reduce the width of the value frame.

The optimizing phase 200 comprises a step 240 of determining an error between the model values and the measured values.

In an example of implementation, the calculated error is the root mean square error. For example, the root mean square error is given by the following equation:

$$RMSE = 100 \cdot \sqrt{\frac{\sum_{i}^{n}(\rho_{\text{model}}(\varphi_i) - \rho_i)^2}{n}} \tag{9}$$

Where:

- RMSE is the root mean square error,
- n is the number of measured values and model values considered for the calculation of the RMSE,
- $\rho_{\text{est},i}$ is the radius of the measured value at point i, and
- $\rho_i$ is the radius of the model value at point i.

Other types of error could also be used.

The optimizing phase 200 comprises a step 250 of optimizing the value of the target parameter so as to minimize the error and to obtain an optimized value for the target parameter. Its should be noted that only the value of the target parameter is optimized in step 250.

In an example, the optimization of the value of the target parameter is carried out using a dichotomy algorithm. The dichotomy algorithm is a method for solving optimization problems.

The method comprises a phase 300 for calculating the values of other parameters of the single-diode model on the basis of the optimized value of the target parameter and of the cardinal values, so as to obtain an optimized single-diode model for the photovoltaic array.

For example, when the target parameter is the diode ideality factor a. The other parameters are calculated by solving equations (4), (5), (6) and (7) above.

The values calculated for the single-diode model are, for example, displayed on a screen.

Hence, the above method enables to determine a single-diode model for a photovoltaic array by optimizing only one parameter of the single diode model, which simplifies the calculation, and renders the calculation faster (order of 20 ms).

Additionally, the method ensured that the open-circuit condition, the maximum power condition, and the short circuit condition are satisfied with zero error, because these values are taken into account in the optimization phase.

Furthermore, the technical/environmental information of the photovoltaic array under analysis are not requested with this method, which renders the implementation easier.

The person skilled in the art will understand that the embodiments and variants described above in the description can all be combined provided that they are technically compatible.

**Claims**

1. A method for determining a single-diode model for a photovoltaic array, the single-diode model enabling to model the current-voltage characteristic of the photovoltaic array as a function of several parameters, the method being computer implemented and comprising:

   - a phase for determining measured values for the photovoltaic array, the determination phase comprising:

      • obtaining a measured current-voltage characteristic for the photovoltaic array,
      • determining cardinal values from the measured current-voltage characteristic, the cardinal values being:

         ○ the short-circuit current ($I_{sc}$) which is the current at zero voltage,
         ○ the open-circuit voltage ($V_{oc}$) which is the voltage at zero current,
         ○ the maximum power current ($I_{mp}$) which is the current giving the maximal power, and
         ○ the maximum power voltage ($V_{mp}$) which is the voltage giving the maximal power,

      • determining measured values representative of the current-voltage characteristic of the photovoltaic array as a function of the measured current-voltage characteristic,

   - a phase for optimizing only one parameter, called target parameter, of the single-diode model, the optimization phase comprising the steps of:

      • setting an initial value for the target parameter among an interval of values,
      • calculating the values of the other parameters of the single-diode model as a function of the set initial value of the target parameter and of the cardinal values,
      • determining model values representative of a modeled current-voltage characteristic of the photovoltaic array as a function of the set initial value of the target parameter and of the other calculated parameters for the single-diode model,
      • determining an error between the model values and the cardinal values, and
      • optimizing the value of the target parameter so as to minimize the error and to obtain an optimized value for the target parameter,

   - a phase for calculating the values of other parameters of the single-diode model on the basis of the optimized value of the target parameter and of the cardinal values, so as to obtain an optimized single-diode model for the photovoltaic array.

2. A method according to claim 1, wherein the single-diode model depends on five parameters which are: a photo-generated current ($i_{ph}$), a diode ideality factor (a), a reverse saturation current ($i_0$), a series resistance ($r_s$) and a shunt conductance ($g_{sh}$), the target parameter being the diode ideality factor (a).

3. A method according to claim 2, wherein the single-diode model is given by the following equation:

$$i_{\mathrm{ph}} = i_{\mathrm{o}} \cdot \left( \exp\left[ \frac{V_{\mathrm{pv}} + r_{\mathrm{s}} \cdot I_{\mathrm{pv}}}{a} \right] - 1 \right) + g_{\mathrm{sh}} \cdot \left( V_{\mathrm{pv}} + r_{\mathrm{s}} \cdot I_{\mathrm{pv}} \right) + I_{\mathrm{pv}}$$

   Where:

- $i_{ph}$ is the photogenerated current,
- $i_o$ is the reverse saturation current,
- $a$ is the diode ideality factor,
- $r_s$ is the series resistance,
- $g_{sh}$ is the shunt conductance,
- $I_{pv}$ is a current of the measured current-voltage characteristic, and
- $V_{pv}$ is a voltage of the measured current-voltage characteristic.

4. A method according to any one of claims 1 to 3, wherein the determination of the measured values comprised:

- the normalization of the measured current-voltage characteristic by the short-circuit current ($I_{sc}$) for the current and by the open-circuit voltage ($V_{oc}$) for the voltage, and
- the transformation of the normalized measured current-voltage characteristic into polar coordinates with a radius and an angle for each point of the measured current-voltage characteristic.

5. A method according to claim 4, wherein the polar coordinates for the measured current-voltage characteristic are given by the following formula:

$$\rho = \sqrt{\left(\frac{V_{PV}}{V_{OC}}\right)^2 + \left(\frac{I_{PV}}{I_{SC}}\right)^2}$$

$$\varphi = \arctan\left(\frac{V_{PV} \cdot I_{SC}}{I_{PV} \cdot V_{OC}}\right)$$

Where:

- $\rho$ is the radius in polar coordinates,
- $\varphi$ is the angle in polar coordinates,
- $V_{PV}$ is a voltage of the measured current-voltage characteristic,
- $I_{PV}$ is a current of the measured current-voltage characteristic,
- $V_{OC}$ is the open-circuit voltage, and
- $I_{SC}$ is the short-circuit current.

6. A method according to claim 4 or 5, wherein the model values are determined in polar coordinates, each radius of the model values being obtained for an angle corresponding to an angle of the measured values.

7. A method according to any one of claims 1 to 6, wherein the optimization of the value of the target parameter is carried out using a dichotomy algorithm.

8. A method according to any one of claims 1 to 7, wherein, during the optimizing phase and the calculating phase, the values of the other parameters of the single-diode model are calculated as a function of the corresponding value of the target parameter, of the maximum power current ($I_{mp}$) normalized by the short-circuit current ($I_{sc}$), and of the open-circuit voltage ($V_{oc}$) normalized by the maximum power voltage ($V_{mp}$).

9. A method according to claim 8, wherein the other parameters are given by the following equation:

$$\left[\frac{v_{mp} \cdot \exp\left(\frac{1}{a}\right) - \exp\left(\frac{v_{mp} + r_s \cdot i_{mp}}{a}\right) + i_{mp} \cdot \exp\left(\frac{r_s}{a}\right) - \left(v_{mp} + i_{mp} - 1\right)}{\left(v_{mp} - r_s \cdot \left(1 - i_{mp}\right)\right) \cdot \exp\left(\frac{1}{a}\right) - (1 - r_s) \cdot \exp\left(\frac{v_{mp} + r_s \cdot i_{mp}}{a}\right) + \left(1 - \left(v_{mp} + r_s \cdot i_{mp}\right)\right) \cdot \exp\left(\frac{r_s}{a}\right)}\right]$$
$$\cdot \exp\left(\frac{v_{mp} + r_s \cdot i_{mp}}{a}\right) \cdot \left(1 - r_s \cdot i_{mp}\right)$$

$$+[a]$$

$$\cdot \left[\frac{\left(1 - i_{mp}\right) \cdot \exp\left(\frac{1}{a}\right) - \exp\left(\frac{v_{mp} + r_s \cdot i_{mp}}{a}\right) + i_{mp} \cdot \exp\left(\frac{r_s}{a}\right)}{\left(v_{mp} - r_s \cdot \left(1 - i_{mp}\right)\right) \cdot \exp\left(\frac{1}{a}\right) - (1 - r_s) \cdot \exp\left(\frac{v_{mp} + r_s \cdot i_{mp}}{a}\right) + \left(1 - \left(v_{mp} + r_s \cdot i_{mp}\right)\right) \cdot \exp\left(\frac{r_s}{a}\right)}\right]$$
$$\cdot \left(1 - r_s \cdot i_{mp}\right)$$
$$-[a] \cdot i_{mp}$$
$$= 0$$

$$i_{ph}$$

$$= \frac{v_{mp} \cdot \exp\left(\frac{1}{a}\right) - \exp\left(\frac{v_{mp} + r_s \cdot i_{mp}}{a}\right) + i_{mp} \cdot \exp\left(\frac{r_s}{a}\right) - \left(v_{mp} + i_{mp} - 1\right)}{\left(v_{mp} - r_s \cdot \left(1 - i_{mp}\right)\right) \cdot \exp\left(\frac{1}{a}\right) - (1 - r_s) \cdot \exp\left(\frac{v_{mp} + r_s \cdot i_{mp}}{a}\right) + \left(1 - \left(v_{mp} + r_s \cdot i_{mp}\right)\right) \cdot \exp\left(\frac{r_s}{a}\right)}$$

$$i_o$$

$$= \frac{v_{mp} + i_{mp} - 1}{\left(v_{mp} - r_s \cdot \left(1 - i_{mp}\right)\right) \cdot \exp\left(\frac{1}{a}\right) - (1 - r_s) \cdot \exp\left(\frac{v_{mp} + r_s \cdot i_{mp}}{a}\right) + \left(1 - \left(v_{mp} + r_s \cdot i_{mp}\right)\right) \cdot \exp\left(\frac{r_s}{a}\right)}$$

$$g_{sh}$$

$$= \frac{\left(1 - i_{mp}\right) \cdot \exp\left(\frac{1}{a}\right) - \exp\left(\frac{v_{mp} + r_s \cdot i_{mp}}{a}\right) + i_{mp} \cdot \exp\left(\frac{r_s}{a}\right)}{\left(v_{mp} - r_s \cdot \left(1 - i_{mp}\right)\right) \cdot \exp\left(\frac{1}{a}\right) - (1 - r_s) \cdot \exp\left(\frac{v_{mp} + r_s \cdot i_{mp}}{a}\right) + \left(1 - \left(v_{mp} + r_s \cdot i_{mp}\right)\right) \cdot \exp\left(\frac{r_s}{a}\right)}$$

Where:

- $i_{ph}$ is the photogenerated current,
- $i_o$ is the reverse saturation current,
- $a$ is the diode ideality factor,
- $r_s$ is the series resistance,
- $g_{sh}$ is the shunt conductance,
- $i_{mp}$ is the maximum power current normalized by the short-circuit current, and
- $v_{mp}$ is the maximum power voltage normalized by the maximum power voltage.

10. A method according to any one of claims 1 to 9, wherein the calculated error is the root mean square error.

11. A method according to any one of claims 1 to 10, wherein the interval of values for the target parameters is bounded, the boundaries being chosen so that the obtained model values are representative of a modeled current-voltage characteristic passing by the maximum power current ($I_{mp}$) and the maximum power voltage ($V_{mp}$).

12. Computer program product comprising a computer readable medium, having thereon a computer program comprising program instructions, the computer program being loadable into a data-processing unit and causing execution of a method according to any one of claims 1 to 11 when the computer program is run by the data-processing unit.

13. A readable information carrier on which a computer program product according to claim 12 is stored.

FIG.1

```
┌─────────────────────────────────────────────┐
│  ┌───────────────────────────────────────┐  │
│  │                 100                   │  │
│  └───────────────────────────────────────┘  │
│                    │                         │
│                    ▼                         │
│  ┌───────────────────────────────────────┐  │
│  │                 120                   │  │──── 100
│  └───────────────────────────────────────┘  │
│                    │                         │
│                    ▼                         │
│  ┌───────────────────────────────────────┐  │
│  │                 130                   │  │
│  └───────────────────────────────────────┘  │
└─────────────────────────────────────────────┘
                     │
                     ▼
┌─────────────────────────────────────────────┐
│  ┌───────────────────────────────────────┐  │
│  │                 210                   │  │
│  └───────────────────────────────────────┘  │
│                    │                         │
│                    ▼                         │
│  ┌───────────────────────────────────────┐  │
│  │                 220                   │  │
│  └───────────────────────────────────────┘  │
│                    │                         │
│                    ▼                         │
│  ┌───────────────────────────────────────┐  │
│  │                 230                   │  │──── 200
│  └───────────────────────────────────────┘  │
│                    │                         │
│                    ▼                         │
│  ┌───────────────────────────────────────┐  │
│  │                 240                   │  │
│  └───────────────────────────────────────┘  │
│                    │                         │
│                    ▼                         │
│  ┌───────────────────────────────────────┐  │
│  │                 250                   │  │
│  └───────────────────────────────────────┘  │
└─────────────────────────────────────────────┘
                     │
                     ▼
   ┌───────────────────────────────────────┐
   │                 300                   │
   └───────────────────────────────────────┘
```

## FIG.2

FIG.3

FIG.4

Europäisches
Patentamt

European
Patent Office

Office européen
des brevets

## EUROPEAN SEARCH REPORT

**Application Number**

EP 23 30 7170

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | POMAZAN CATALIN-CONSTANTIN: "Internal Parameters Extraction Algorithm for Mono and Polycrystalline Photovoltaic Panels Using Single-Diode Model", 2022 INTERNATIONAL CONFERENCE AND EXPOSITION ON ELECTRICAL AND POWER ENGINEERING (EPE), IEEE, 20 October 2022 (2022-10-20), pages 311-316, XP034234208, DOI: 10.1109/EPE56121.2022.9959749 [retrieved on 2022-11-25] | 1-8, 10-13 | INV. H02S50/00 |
| A | * page 311 - page 316 * | 9 | |
| A | OBBADI ABDELLATIF ET AL: "Photovoltaic (PV) parameter estimation of a multicrystalline panel using developed iterative and non-iterative methods", 2015 3RD INTERNATIONAL RENEWABLE AND SUSTAINABLE ENERGY CONFERENCE (IRSEC), IEEE, 10 December 2015 (2015-12-10), pages 1-6, XP032892913, DOI: 10.1109/IRSEC.2015.7455009 [retrieved on 2016-04-18] * page 1 - page 6 * | 1-13 | |

**TECHNICAL FIELDS SEARCHED (IPC)**

H02S

The present search report has been drawn up for all claims

| Place of search | Date of completion of the search | Examiner |
|---|---|---|
| The Hague | 7 May 2024 | Boero, Mauro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 3130453 A

**Non-patent literature cited in the description**

- **A. LAUDANI** ; **F. RIGANTI FULGINEI** ; **A. SALVINI** ; **G. M. LOZITO** ; **S. COCO**. Very Fast and Accurate Procedure for the Characterization of Photovoltaic Panels from Datasheet Information. *International Journal of Photoenergy*, March 2014, vol. 2014